(19)

Europäisches Patentamt
European Patent Office
Office européen des brevets

(11) **EP 4 625 097 A1**

(12) **EUROPEAN PATENT APPLICATION**
published in accordance with Art. 153(4) EPC

(43) Date of publication:
01.10.2025 Bulletin 2025/40

(21) Application number: 23907831.4

(22) Date of filing: 21.12.2023

(51) International Patent Classification (IPC):
*G06F 1/16* (2006.01)   *H02P 1/22* (2006.01)
*H02P 6/06* (2006.01)   *H02P 6/30* (2016.01)
*H04M 1/02* (2006.01)

(52) Cooperative Patent Classification (CPC):
G06F 1/16; H02P 1/22; H02P 6/06; H02P 6/30;
H04M 1/02

(86) International application number:
PCT/KR2023/021331

(87) International publication number:
WO 2024/136548 (27.06.2024 Gazette 2024/26)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 22.12.2022  KR 20220182011
12.01.2023  KR 20230004579

(71) Applicant: Samsung Electronics Co., Ltd.
Suwon-si, Gyeonggi-do 16677 (KR)

(72) Inventors:
• **CHOI, Junwoo**
Suwon-si Gyeonggi-do 16677 (KR)
• **KIM, Sukdong**
Suwon-si Gyeonggi-do 16677 (KR)
• **KANG, Hyunggwang**
Suwon-si Gyeonggi-do 16677 (KR)
• **PARK, Jihea**
Suwon-si Gyeonggi-do 16677 (KR)

(74) Representative: **Nederlandsch Octrooibureau**
**P.O. Box 29720**
**2502 LS The Hague (NL)**

(54) **ELECTRONIC DEVICE COMPRISING FLEXIBLE DISPLAY AND METHOD FOR OPERATING SAME**

(57)    An electronic device according to an embodiment of the present disclosure may comprise: a memory for storing instructions; a first housing; a second housing disposed to be able to move in a first or second direction with regard to the first housing, the second housing overlapping at least a part of the first housing; a flexible display mounted at least partially on the surface of the second housing such that at least a part of an externally exposed area thereof is reduced or expanded on the basis of the movement of the second housing; a motor for driving the second housing so as to move in the first or second direction; a drive circuit for controlling the driving of the motor; and a processor. The instructions may be configured to cause, when executed by the processor, the electronic device to: transmit a motor driving signal for driving the motor to the drive circuit upon receiving a trigger signal related to reduction or expansion of the flexible display; calculate the distance of movement of the second housing or the flexible display on the basis or the rate of rotation of the motor and the time of operation thereof while the motor operates on the basis of the motor driving signal; and initialize the calculated distance of movement upon acquiring a signal related to the position of the second housing or the flexible display.

FIG. 7B

EP 4 625 097 A1

## Description

[Technical Field]

The disclosure relates to an electronic device including a flexible display that is extendable or retractable, and a method of operating the same.

[Background Art]

As the demand for mobile communication increases on one hand, and the integration level of electronic devices increases on the other hand, the portability of electronic devices such as mobile communication terminals and the convenience of using multimedia functions may be improved. For example, when a display with an integrated touch screen function replaces a traditional mechanical (button-type) keypad, an electronic device may be miniaturized while maintaining the function of an input device. For example, when a mechanical keypad is removed from an electronic device, the portability of the electronic device may be improved. In an embodiment, when a display is expanded by as much as an area where the mechanical keypad is removed, an electronic device including the touch screen function may provide a larger screen than an electronic device including a mechanical keypad, even if the former has the same size and weight as the latter.

For web surfing or multimedia functions, it may be more convenient to use an electronic device that outputs a larger screen. Although a larger display may be mounted on the electronic device to output a larger screen, there may be limitations in increasing the size of the display, for the portability of the electronic device. In an embodiment, a display using an organic light-emitting diode may secure the portability of an electronic device while providing a larger screen. For example, even if it is manufactured to be considerably thin, a display using an organic light-emitting diode (or an electronic device equipped with the same) may still implement a stable operation and be mounted in a foldable, bendable, or rollable form on an electronic device.

The above information is presented as related art only to assist with an understanding of the disclosure. No determination has been made, and no assertion is made, as to whether any of the above might be applicable as prior art with regard to the disclosure.

[Detailed Description of the Invention]

[Technical Solution]

An electronic device according to an embodiment of the disclosure may include memory storing instructions, a first housing, a second housing disposed to be movable in a first direction or a second direction with respect to the first housing and overlapping at least a portion of the first housing, a flexible display at least partially mounted on a surface of the second housing and having at least a portion of an area exposed to an outside retracted or extended based on movement of the second housing, a motor configured to drive the second housing to move in the first direction or the second direction, a drive circuit configured to control the driving of the motor, and a processor. The instructions may be configured to, when executed by the processor, cause the electronic device to, when receiving a trigger signal related to retraction or extension of the flexible display, transmit a motor drive signal for driving the motor to the drive circuit. The instructions may be configured to, when executed by the processor, cause the electronic device to, based on a rotation speed and an operation time of the motor in an active state of the motor based on the motor drive signal, calculate a movement distance of the second housing or the flexible display. The instructions may be configured to, when executed by the processor, cause the electronic device to, when obtaining a signal related to a position of the second housing or the flexible display, initialize the calculated movement distance.

A method of operating an electronic device according to an embodiment of the disclosure may include, when receiving a trigger signal related to retraction or extension of a flexible display, transmitting a motor drive signal for driving a motor to a drive circuit. The method of operating an electronic device according to an embodiment may include, based on a rotation speed and an operation time of the motor in an active state of the motor based on the motor drive signal, calculating a movement distance of a second housing or the flexible display. The method of operating an electronic device according to an embodiment may include, when obtaining a signal related to a position of the second housing or the flexible display, initializing the calculated movement distance.

In a computer-readable storage medium storing instructions according to an embodiment of the disclosure, when executed by a processor of an electronic device including a first housing, a second housing disposed to be movable in a first direction or a second direction with respect to the first housing and overlapping at least a portion of the first housing, a flexible display at least partially mounted on a surface of the second housing and having at least a portion of an area exposed to an outside retracted or extended based on movement of the second housing, a motor configured to drive the second housing to move in the first direction or the second direction, and a drive circuit configured to control the driving of the motor, the instructions may cause the electronic device to perform operations. The operations may include, when receiving a trigger signal related to retraction or extension of the flexible display. The operations may include transmitting a motor drive signal for driving the motor to the drive circuit. The operations may include, based on a rotation speed and an operation time of the motor in an active state of the motor based on the motor drive signal, calculating a movement distance of the second housing or the flexible display. The operations may include, when obtaining a signal related to a position of the second housing or the flexible display, initializing the calculated movement distance.

[Brief Description of Drawings]

FIG. 1 is a block diagram illustrating an electronic device in a network environment according to an embodiment of the disclosure.

FIG. 2 is a diagram illustrating a state in which a second display area of a display is accommodated within a housing according to an embodiment of the disclosure.

FIG. 3 is a diagram illustrating a state in which a second display area of a display is exposed to the outside of a housing according to an embodiment of the disclosure.

FIG. 4 is an exploded perspective view illustrating an electronic device according to an embodiment of the disclosure.

FIG. 5A is a cross-sectional view taken along line A-A' of FIG. 2 according to an embodiment of the disclosure.

FIG. 5B is a cross-sectional view taken along line B-B' of FIG. 3 according to an embodiment of the disclosure.

FIG. 6 is a block diagram illustrating an electronic device including a flexible display according to an embodiment of the disclosure.

FIG. 7A is a detailed block diagram illustrating an electronic device including a flexible display according to a comparative example.

FIG. 7B is a detailed block diagram illustrating an electronic device including a flexible display according to an embodiment of the disclosure.

FIG. 8 is a graph illustrating at least one operation period in which a motor is driven according to an embodiment of the disclosure.

FIG. 9 illustrates a position detection sensor in retracted and extended states of a flexible display according to an embodiment of the disclosure.

FIG. 10 illustrates a relationship between the rotation of a motor and a movement distance of a second housing or flexible display according to an embodiment of the disclosure.

FIG. 11 is a flowchart illustrating a method of operating an electronic device including a flexible display according to an embodiment of the disclosure.

[Mode for Carrying out the Invention]

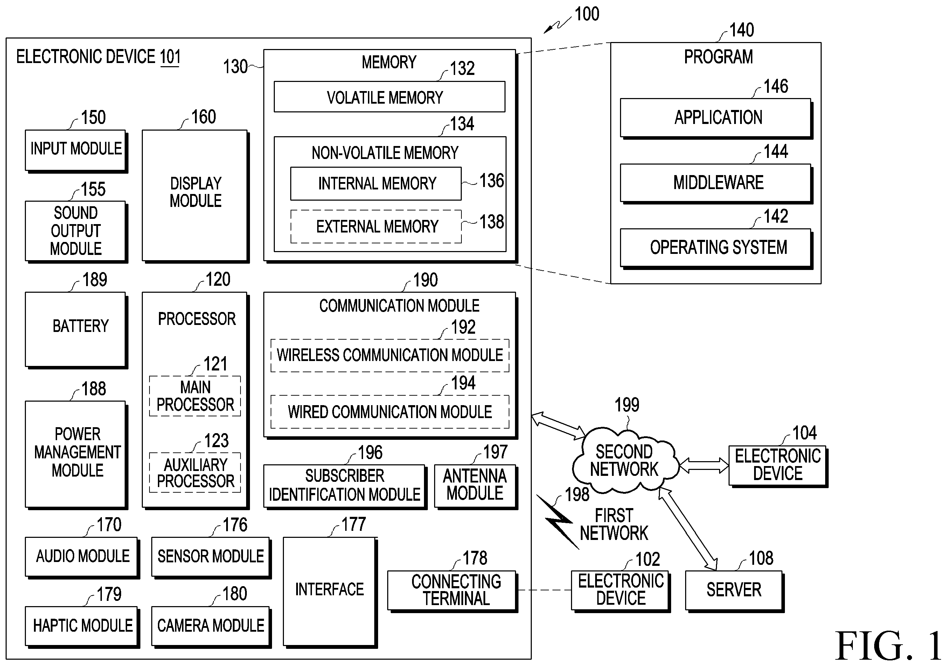

FIG. 1 is a block diagram illustrating an electronic device 101 in a network environment 100 according to embodiments of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

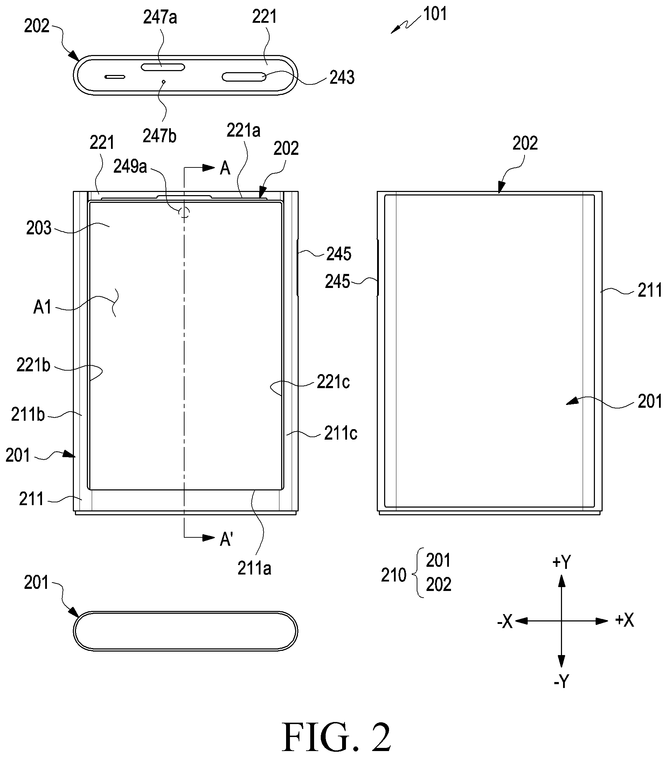

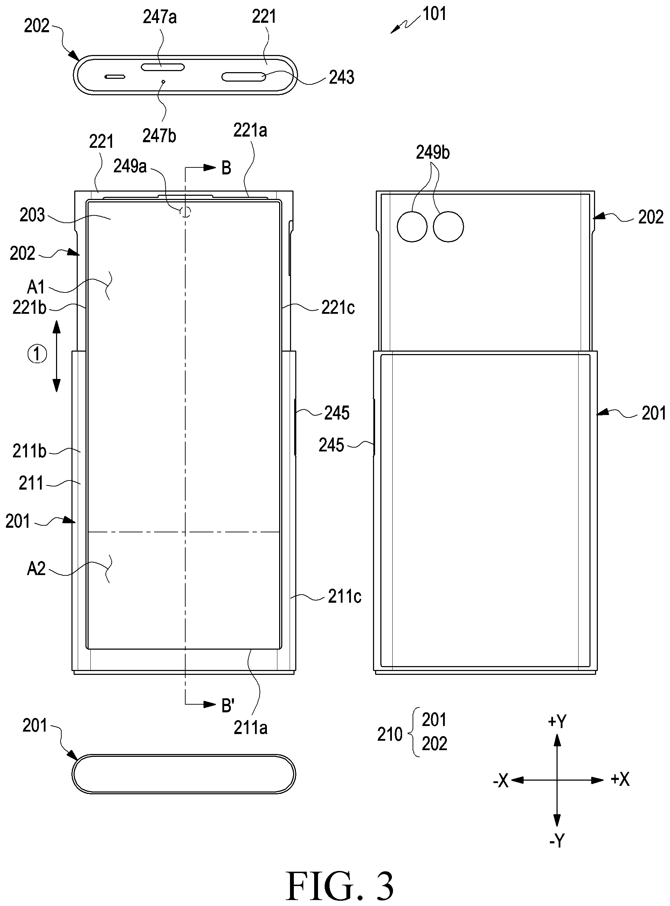

FIG. 2 is a diagram illustrating a state in which a second display area (e.g., a second display area A2 in FIG. 3) of a display 203 is accommodated in a housing 210 according to an embodiment of the disclosure. FIG. 3 is a diagram illustrating a state in which the second display area A2 of the display 203 is exposed to the outside of the housing 210 according to an embodiment of the disclosure.

FIGS. 2 and 3 illustrate a structure in which the display 203 (e.g., a flexible display or rollable display) extends in a longitudinal direction (e.g., +Y direction), when viewed from the front of the electronic device 101. However, the direction of extension of the display 203 is not limited to one direction (e.g., +Y direction). For example, a design modification may be made such that the display 203 is extendable in an upward direction (e.g., +Y direction), a right direction (e.g., +X direction), a left direction (e.g., -X direction), and/or a downward direction (e.g., -Y direction).

The state illustrated in FIG. 2 may be referred to as a closed state of the electronic device 101 or a housing 210 and a slide-in state of the display 203.

The state illustrated in FIG. 3 may be referred to as an open state of the electronic device 101 or the housing 210 and a slide-out state of the display 203.

Referring to FIGS. 2 and 3, the electronic device 101 may include the housing 210. The housing 210 may include a first housing 201 and a second housing 202 disposed to be movable with respect to the first housing 201. In some embodiments, it may be interpreted as a structure in which the first housing 201 is disposed to be slidable with respect to the second housing 202 in the electronic device 101. According to an embodiment, the second housing 202 may be disposed to be reciprocable by a predetermined distance in a direction illustrated with respect to the first housing 201, for example, in a direction indicated by an arrow ①.

According to an embodiment, the second housing 202 may be referred to as a slide part or a slide housing, and movable relative to the first housing 201. According to an embodiment, the second housing 202 may accommodate various electrical and electronic components such as a circuit board or a battery.

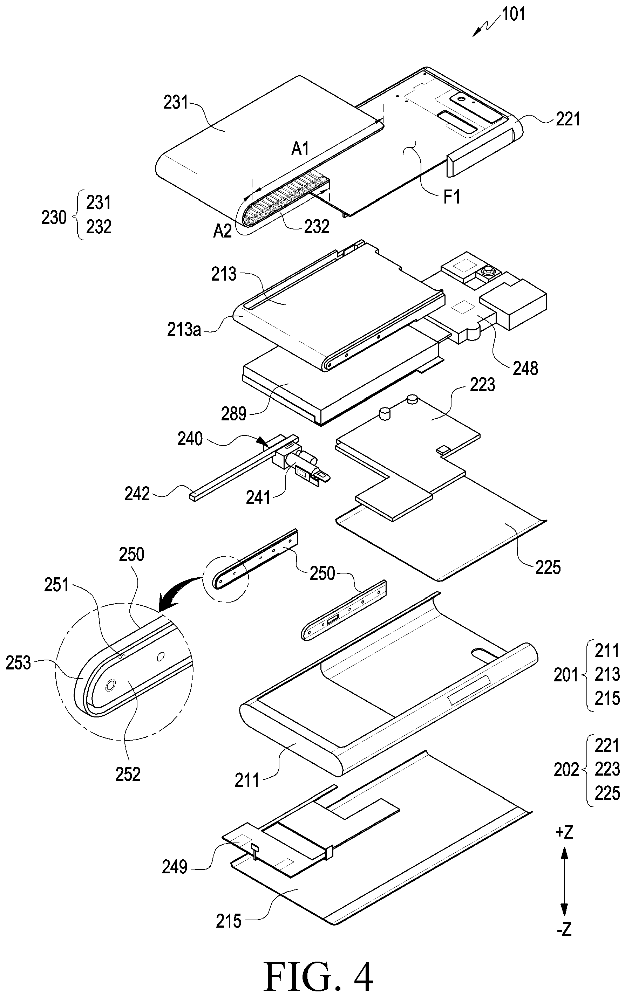

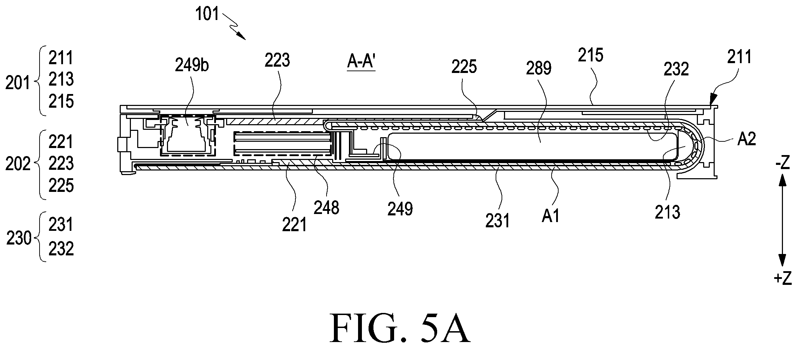

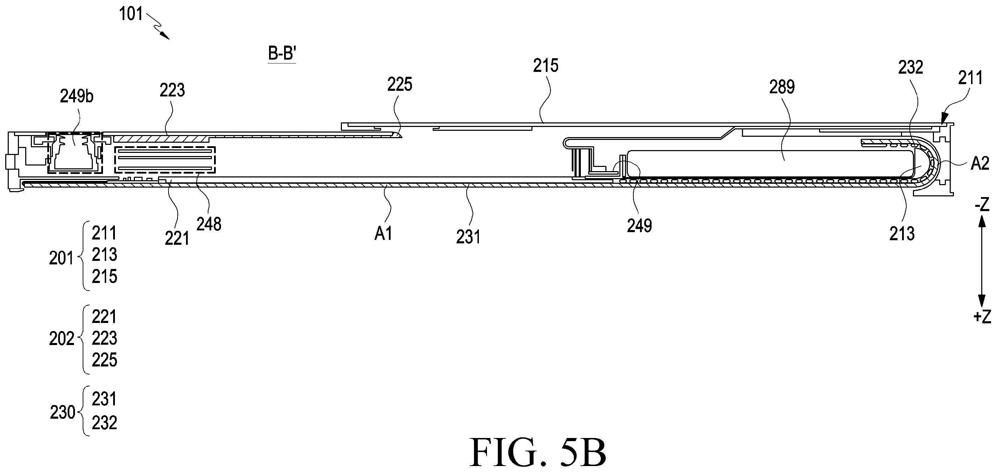

According to an embodiment, a motor, a speaker, a SIM socket, and/or a sub-circuit board (e.g., a second circuit board 249 in FIGS. 4, 5A, and 5B) electrically connected to a main circuit board may be disposed in the first housing 201. The second housing 202 may accommodate the main circuit board (e.g., a first circuit board 248 in FIGS. 4, 5A, and 5B) with electrical components such as an AP and a CP mounted thereon. In an embodiment, the first housing 201 and the second housing are not limited to the configuration, the main circuit board (e.g., the first circuit board 248) may be accommodated in the first housing 201, and the sub-circuit board (e.g., the second circuit board 249) may be accommodated in the second housing 202.

According to an embodiment, the first housing may include a first cover member 211 (e.g., a main case). The first cover member 211 may include a (1-1)th sidewall 211a, a (1-2)th sidewall 211b extending from the (1-1)th sidewall 211a, and a (1-3)th sidewall 211c extending from the (1-1)th sidewall 211a and substantially parallel to the (1-2)th sidewall 211b. According to an embodiment, the (1-2)th sidewall 211b and the (1-3)th sidewall 211c may be formed substantially perpendicular to the (1-1)th sidewall 211a.

According to an embodiment, the (1-1)th sidewall 211a, the (1-2)th sidewall 211b, and the (1-3)th sidewall 211c of the first cover member 211 may be formed with one side (e.g., a front surface) open to accommodate (or surround) at least a portion of the second housing 202. For example, the second housing 202 may be at least partially surrounded by the first housing 201 and slide in a direction parallel to a first surface (e.g., a first surface F1 in FIG. 4), for example, in the direction of the arrow ①, while being guided by the first housing 201. According to an embodiment, the cover member 211, the (1-1)th sidewall 211a, the (1-2)th sidewall 211b, and/or the (1-3)th sidewall 211c may be integrally formed. According to an embodiment, the first cover member 211, the (1-1)th sidewall 211a, the (1-2)th sidewall 211b, and/or the (1-3)th sidewall 211c may be formed as separate housings and combined or assembled.

According to an embodiment, the first cover member 211 may be formed to surround at least a portion of the display 203. For example, at least a portion of the display 203 may be formed to be surrounded by the (1-1)th sidewall 211a, the (1-2)th sidewall 211b, and/or the (1-3)th sidewall 211c of the first cover member 211.

According to an embodiment, the second housing 202 may include a second cover member 221 (e.g., a slide plate). The second cover member 221 may have a plate shape and include the first surface (e.g., the first surface F1 in FIG. 4) supporting internal components. For example, the second cover member 221 may support at least a portion (e.g., a first display area A1) of the display 203. According to an embodiment, the second cover member 221 may be referred to as a front cover.

According to an embodiment, the second cover member 221 may include a (2-1)th sidewall 221a, a (2-2)th sidewall 221b extending from the (2-1)th sidewall 221a, and a (2-3)th sidewall 221c extending from the (2-1)th sidewall 221a and substantially parallel to the (2-2)th sidewall 221b. According to an embodiment, the (2-2)th sidewall 221b and the (2-3)th sidewall 221c may be formed substantially perpendicular to the (2-1)th sidewall 221a.

According to an embodiment, as the second housing 202 moves in a first direction (e.g., the direction ①) parallel to the (1-2)th sidewall 211b or the (1-3)th sidewall 211c, the second housing 202 may form the open state and closed state of the housing 210. The second housing 202 may move to be located at a first distance from the (1-1)th sidewall 211a in the closed state and at a second distance larger than the first distance from the (1-1)th sidewall 211a in the open state. In an embodiment, the first housing 201 may surround a portion of the (2-1)th sidewall 221a in the closed state.

According to an embodiment, the electronic device 101 may include the display 203, key input devices 245, a connector hole 243, audio modules 247a and 247b, or camera modules 249a and 249b. According to an embodiment, the electronic device 101 may further include an indicator (e.g., an LED device) or various sensor modules.

According to an embodiment, the display 203 may include the first display area A1 and the second display area A2 configured to be exposed to the outside of the electronic device based on sliding movement of the second housing 202. According to an embodiment, the first display area A1 may be disposed on the second housing 202. For example, the first display area A1 may be disposed on the second cover member 221 of the second housing 202. According to an embodiment, the second display area A2 may extend from the first display area A1, and as the second housing 202 slides with respect to the first housing 201, the second display area A2 may be accommodated into the first housing 201 (e.g., the slide-in state) or may be exposed to the outside of the electronic device 101 (e.g., the slide-out state).

According to an embodiment, the second display area A2 may move while being guided substantially by an area (e.g., a curved surface 213a in FIG. 4), and may be accommodated into an internal space of the first housing 201 or exposed to the outside of the electronic device 101. According to an embodiment, the second display area A2 may move based on sliding movement of the second housing 202 in the first direction (e.g., the direction indicated by the arrow ①). For example, a portion of the second display area A2 may be deformed into a curved surface at a position corresponding to the curved surface 213a of the first housing 201 during sliding movement of the second housing 202.

According to an embodiment, when viewed from above the second cover member 221 (e.g., a front cover), when the housing 210 is changed from the closed state to the open state (e.g., the second housing 202 slides to extend from the first housing 201), the second display area A2 may form a substantially flat surface with the first display area A1, while gradually being exposed to the outside of the first housing 201. According to an embodiment, the display 203 may be coupled to or disposed adjacent to a touch sensing circuit, a pressure sensor capable of measuring the intensity (pressure) of a touch, and/or a digitizer that detects a magnetic stylus pen. According to an embodiment, regardless of the closed or open state of the housing 210, an exposed portion of the second display area A2 may be located on a portion (e.g., the curved surface 213a in FIG. 4) of the first housing, and maintain the shape of the curved surface at the position corresponding to the curved surface 213a.

According to an embodiment, the key input devices 245 may be located in an area of the first housing 201. Depending on the appearance and a use state, the electronic device 101 may be designed to be without the illustrated key input devices 245 or to include additional key input device(s). According to an embodiment, the electronic device 101 may include a key input device not shown, such as a home key button or a touch pad disposed around the home key button. According to an embodiment, at least some of the key input devices 245 may be disposed on the (1-1)th sidewall 211a, the (1-2)th sidewall 211b, and/or the (1-3)th sidewall 211c of the first housing 201.

According to an embodiment, the connector hole 243 may be omitted according to an embodiment, and may accommodate a connector (e.g., a USB connector) for transmitting power and/or data to and from an external electronic device. According to an embodiment (not shown), the electronic device 101 may include a plurality of connector holes 243, and some of the plurality of connector holes 243 may function as connector holes for transmitting and receiving audio signals to and from an external electronic device. In the illustrated embodiment, the connector hole 243 is disposed on the second housing 202, to which the disclosure is not limited. The connector hole 243 or a connector hole not shown may be disposed on the first housing 201.

According to an embodiment, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound, and the microphone may obtain sound external to the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as a single hole, or include a speaker (e.g., a piezo speaker) without the speaker hole 247a.

According to an embodiment, the camera modules 249a and 249b may include a first camera module 249a (e.g., front camera) and a second camera module 249b (e.g., rear camera) (e.g., the second camera module 249b in FIGS. 5A and 5B). According to an embodiment, the electronic device 101 may include at least one of a wide-angle camera, a telephoto camera, or a close-up camera, and according to an embodiment, include an IR projector and/or an IR receiver to measure a distance to a subject. The camera modules 249a and 249b may include one or more lenses, an image sensor, and/or an image signal processor. The first camera module 249a may be disposed to face in the same direction as the display 203. For example, the first camera module 249a may be disposed around the first display area A1 or in an area overlapping the display 203 and, when disposed in the area overlapping the display 203, may be able to capture a subject through the display 203. According to an embodiment, the first camera module 249a may not be visually exposed to a screen display area (e.g., the first display area A1) and include a hidden under display camera (UDC). According to an embodiment, the second camera module 249a may capture a subject in a direction opposite to the display A1. According to an embodiment, the first camera module 249a and/or the second camera module 249b may be disposed on the second housing 202.

According to an embodiment, an indicator (not shown) of the electronic device 101 may be disposed in the first housing 201 or the second housing 202, and include an LED to provide state information about the electronic device 101 as a visual signal. A sensor module (not shown) of the electronic device 101 may generate an electrical signal or data value corresponding to an internal operational state or an external environmental state of the electronic device 101. The sensor module may include, for example, a proximity sensor, a fingerprint sensor, or a biometric sensor (e.g., an iris/facial recognition sensor or an HRM sensor). In an embodiment, the sensor module may further include at least one of, for example, a gesture sensor, a gyro sensor, a barometric pressure sensor, a magnetic sensor, an acceleration sensor, a grip sensor, a color sensor, an IR sensor, a temperature sensor, a humidity sensor, or an illuminance sensor.

FIG. 4 is an exploded perspective view illustrating the electronic device 101 according to an embodiment of the disclosure. FIG. 5A is a cross-sectional view along line A-A' of FIG. 2 according to an embodiment of the disclosure. FIG. 5B is a cross-sectional view along line B-B' of FIG. 3 according to an embodiment of the disclosure.

Referring to FIG. 4, FIG. 5A, and/or FIG. 5B, the electronic device 101 may include the first housing 201, the second housing 202, a display assembly 230, and a driving structure 240. The configurations of the first housing 201, the second housing 202, and the display assembly 230 in FIG. 4, FIG. 5A, and/or FIG. 5B may be wholly or partially identical to those of the first housing 201, the second housing 202, and the display 203 in FIG. 2 and/or FIG. 3.

According to an embodiment, the first housing 201 may include the first cover member 211 (e.g., the first cover member 211 in FIGS. 2 and 3), the frame 213, and a first rear plate 215.

According to an embodiment, the first cover member 211 may accommodate at least a portion of the frame 213 and a component (e.g., a battery 289) located on the frame 213. According to an embodiment, the first cover member 211 may be formed to surround at least a portion of the second housing 202. According to an embodiment, the second circuit board 249 accommodating electronic components (e.g., the battery 289 or the speaker and/or the SIM socket) may be connected to the first cover member 211.

According to an embodiment, the frame 213 may be connected to the first cover member 211. For example, the frame 213 may be connected to the first cover member 211, and the second housing 202 may move relative to the first cover member 211 and/or the frame 213. According to an embodiment, the frame 213 may accommodate the battery 289. According to an embodiment, the frame 213 may include the curved surface 213a facing the display assembly 230.

According to an embodiment, the first rear plate 215 may substantially form at least a portion of the exterior of the first housing 201 or the electronic device 101. For example, the first rear plate 215 may be coupled to an outer surface of the first cover member 221. According to an embodiment, the first rear plate 215 may provide a decorative effect on the exterior of the electronic device 101. The first rear plate 215 may be manufactured using at least one of metal, glass, synthetic resin, or ceramic.

According to an embodiment, the second housing 202 may include the second cover member 221 (e.g., the second cover member 221 in FIGS. 2 and 3), a rear cover 223, and a second rear plate 225.

According to an embodiment, the second cover member 221 may be connected to the first housing 201 through a guide rail 250 and reciprocate in a straight line in one direction (e.g., the direction of the arrow ① in FIG. 3) while being guided by the guide rail 250.

According to an embodiment, the second cover member 221 may support at least a portion of a display 231. For example, the second cover member 221 may include the first surface F1, and the first display area A1 of the display 231 may be substantially located on the first surface F1 and maintained in a flat shape. According to an embodiment, the second cover member 221 may be formed of a metallic material and/or a non-metallic (e.g., polymer) material. According to an embodiment, the first circuit board 248 accommodating electronic components (e.g., the processor 120 and/or the memory 130 in FIG. 1) may be connected to the second cover member 221.

According to an embodiment, the rear cover 223 may protect components (e.g., the first circuit board 248) located on the second cover member 221. For example, the rear cover 223 may be formed to be connected to the second cover member 221 and surround at least a portion of the first circuit board 248. According to an embodiment, the rear cover 223 may include an antenna pattern to communicate with an external electronic device. For example, the rear cover 223 may include a laser direct structuring (LDS) antenna.

According to an embodiment, the second rear plate 225 may substantially form at least a portion of the exterior of the second housing 202 or the electronic device 101. For example, the second rear plate 225 may be coupled to an outer surface of the second cover member 221. According to an embodiment, the second rear plate 225 may provide a decorative effect on the exterior of the electronic device 101. The second rear plate 215 may be manufactured using at least one of metal, glass, synthetic resin, or ceramic.

According to an embodiment, the display assembly 230 may include the display 231 (e.g., the display 203 in FIG. 2 and/or FIG. 3) and a multi-bar structure 232 supporting the display 231. According to an embodiment, the display 231 may be referred to as a flexible display, a foldable display, and/or a rollable display.

According to an embodiment, the multi-bar structure 232 may be connected or attached to at least a portion (e.g., the second display area A2) of the display 231. According to an embodiment, as the second housing 202 slides, the multi-bar structure 232 may move relative to the first housing 201. In the closed state (e.g., FIG. 2) of the electronic device 101, most of the multi-bar structure 232 may be accommodated at least partially in the first housing 201 and located between the first cover member 211 and the second cover member 221. According to an embodiment, at least a portion of the multi-bar structure 232 may move in correspondence with the curved surface 213a located at an edge of the frame 213. According to an embodiment, the multi-bar structure 232 may be referred to as a display support member or a support structure and have a single elastic plate shape.

According to an embodiment, the driving structure 240 may move the second housing 202 relative to the first housing 201. For example, the driving structure 240 may include a motor 241 configured to generate a driving force for sliding movement of the housings 201 and 202. The driving structure 240 may include a gear (e.g., a pinion) connected to the motor 241 and a rack 242 configured to mesh with the gear.

According to an embodiment, a housing in which the rack 242 is located may be different from a housing in which the motor 241 is located. According to an embodiment, the motor 241 may be connected to the second housing 202, and the rack 242 may be connected to the first housing 201. According to an embodiment, the motor 241 may be connected to the first housing 201, and the rack 242 may be connected to the second housing 202.

According to an embodiment, the first housing 201 may accommodate the first circuit board 248 (e.g., the main board). According to an embodiment, a processor, memory, and/or an interface may be mounted on the first circuit board 248. The processor may include, for example, one or more of a CPU, an AP, a GPU, an ISP, a sensor hub processor, or a CP. According to an embodiment, the first circuit board 248 may include a flexible printed circuit board type radio frequency cable (FRC). The first circuit board 248 may be disposed on at least a portion of the second cover member 221 and electrically connected to an antenna module (e.g., the antenna module 197 of FIG. 1) and a communication module (e.g., the communication module 190 of FIG. 1).

According to an embodiment, the memory may include, for example, volatile memory or non-volatile memory.

According to an embodiment, the interface may include, for example, an HDMI, a USB interface, an SD card interface, and/or an audio interface. For example, the interface may electrically or physically connect the electronic device 101 to an external electronic device and include a USB connector, an SD card/MMC connector, or an audio connector.

According to an embodiment, the electronic device 101 may include the second circuit board 249 (e.g., sub-circuit board) within the first housing 201, spaced apart from the first circuit board 248 (e.g., the main circuit board). The second circuit board 249 may be electrically connected to the first circuit board 248 through a connecting flexible board. The second circuit board 249 may be electrically connected to electrical components disposed in an end area of the electronic device 101, such as the battery 289 or a speaker and/or a SIM socket, to transmit signals and power. According to an embodiment, the second circuit board 249 may accommodate a wireless charging antenna (e.g., a coil). For example, the battery 289 may receive power from an external electronic device using the wireless charging antenna. In another example, the battery 289 may transfer power to an external electronic device using the wireless charging antenna.

According to an embodiment, the battery 289, which is a device for supplying power to at least one component of the electronic device 101, may be a non-rechargeable primary battery, a rechargeable secondary battery, or a fuel cell. The battery 289 may be disposed integrally within the electronic device 101 or detachably from the electronic device 101. According to an embodiment, the battery 289 may be formed as a single integrated battery or include a plurality of separate batteries. According to an embodiment, the battery 289 may be located on the frame 213 and fixed to the housing 201, together with the frame 213.

According to an embodiment, the guide rail 250 may guide movement of the multi-bar structure 232. For example, the multi-bar structure 232 may slide along a slit 251 formed on the guide rail 250. According to an embodiment, the guide rail 250 may be connected to the first housing 201. For example, the guide rail 250 may be connected to the first cover member 211 and/or the frame 213. According to an embodiment, the slit 251 may be referred to as a groove or recess formed on an inner surface of the guide rail 250.

According to an embodiment, the guide rail 250 may provide pressure to the multi-bar structure 232 based on driving of the motor 241.

According to an embodiment, when the electronic device 101 is changed from the closed state to the open state, an inner portion 252 of the guide rail 250 may provide pressure to the multi-bar structure 232. The multi-bar structure 232 provided with pressure may move along the slit 251 of the guide rail 250, and the second housing 202 may be changed from the slide-in state to the slide-out state with respect to the first housing 201. At least a portion of the display assembly 230 accommodated between the first cover member 211 and the frame 213 may extend to the front surface.

According to an embodiment, when the electronic device 101 is changed from the open state to the closed state, an outer portion 253 of the guide rail 250 may provide pressure to the bent multi-bar structure 232. The multi-bar structure 232 provided with pressure may move along the slit 251 of the guide rail 250, and the second housing 202 may be changed from the slide-out state to the slide-in state with respect to the first housing 201. At least a portion of the display assembly 230 may be accommodated between the first cover member 211 and the frame 213.

Referring to FIG. 5A, when the electronic device 101 is in the closed state, at least a portion of the second housing 202 may be disposed to be accommodated in the first housing 201. As the second housing 202 is disposed to be accommodated in the first housing 201, the overall volume of the electronic device 101 may be reduced. According to an embodiment, when the second housing 202 is accommodated in the first housing 201, the size of the visually exposed display 231 may be minimized. For example, when the second housing 202 is fully accommodated in the first housing 201, the first display area A1 of the display 231 may be visually exposed, and the second display area A2 may not be visually exposed. At least a portion of the second display area A2 may be located between the battery 289 and the rear plates 215 and 225.

Referring to FIG. 5B, when the electronic device 101 is in the open state, at least a portion of the second housing 202 may protrude from the first housing 201. As the second housing 202 protrudes from the first housing 201, the overall volume of the electronic device 101 may increase. According to an embodiment, when the second housing 202 protrudes from the first housing 201, at least a portion of the second display area A2 of the display 231 may be visually exposed together with the first display area A1 to the outside of the electronic device 101.

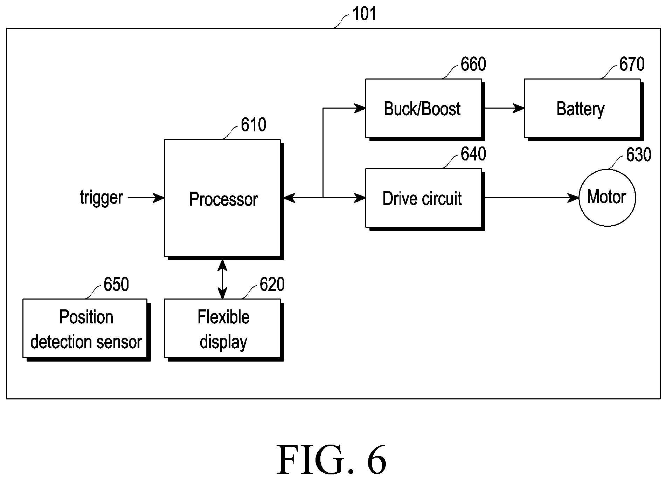

FIG. 6 is a block diagram illustrating the electronic device 101 including a flexible display 620 according to an embodiment of the disclosure.

Referring to FIG. 6, the electronic device 101 including the flexible display 620 according to an embodiment may include a processor 610, the flexible display 620 (e.g., the display 203 of FIG. 2), a motor 630 (e.g., the motor 241 of FIG. 4), a drive circuit 640, a position detection sensor 650, a buck/boost 660, and/or a battery 670 (e.g., the battery 289 of FIG. 4). Additionally, the electronic device 101 including the flexible display 620 according to an embodiment may include some or all of the components included in the electronic device 101 in FIG. 1.

According to an embodiment, the processor 610 may execute software (e.g., a program) to control at least one other component (e.g., a hardware or software component) of the electronic device 101 including the flexible display 620 connected to the processor 610 and perform various data processing or operations. According to an embodiment, the processor 610 may store commands or data received from other components in memory (not shown), process the commands or data stored in the memory (not shown), and store result data in the memory (not shown).

According to an embodiment, the processor 610 may be a component included in a motor control unit (MCU) that controls the drive circuit 640 to control a driving operation of the motor 630.

According to an embodiment, the flexible display 620 may visually provide information to the outside (e.g., a user) of the electronic device 101 including the flexible display 620. According to an embodiment, the flexible display 620 may be a display module (e.g., the display module 160 of FIG. 1) including a display, a holographic device, or a projector, and a control circuit for controlling a corresponding device, and may include a touch sensor configured to detect a touch or a pressure sensor configured to measure the intensity of a force generated by the touch.

In an embodiment, the flexible display 620 may have both ends fixed to each of a first housing (e.g., the first housing 201 of FIG. 2) and a second housing (e.g.,

the second housing 202 of FIG. 2), and may be retracted or extended at least partially by sliding (e.g., sliding in or sliding out) between the first housing 201 and the second housing 202.

In an embodiment, the motor 630 may be driven by power and slide the second housing 202 with respect to the first housing 201 in a first direction (e.g., the +Y-axis direction in FIGS. 2 and 3) or a second direction (e.g., the -Y-axis direction in FIGS. 2 and 3). In an embodiment, the processor 610 may drive the motor 630 to move the second housing 202 in the first direction or the second direction, based on reception of a trigger signal related to the retraction or extension of the flexible display 620, thereby retracting or extending the flexible display 620.

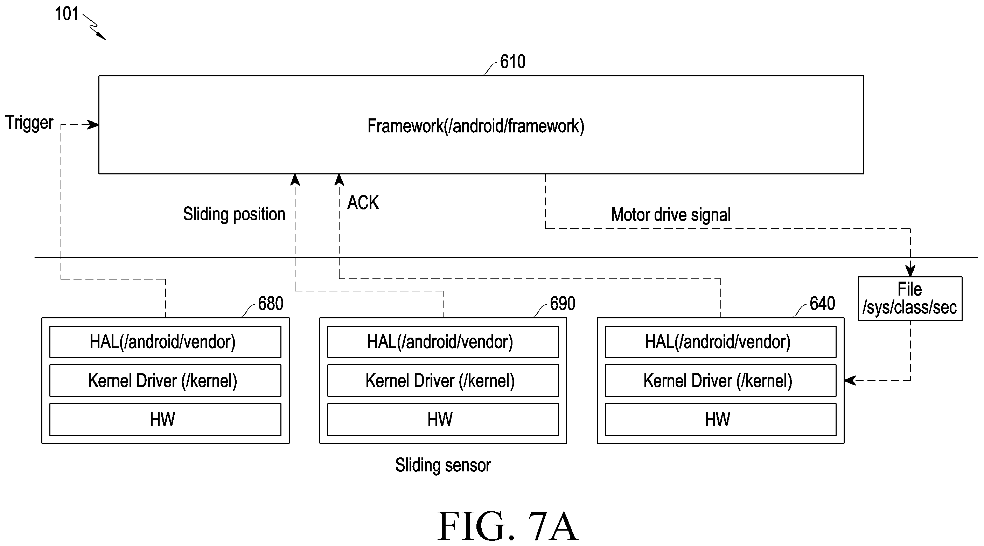

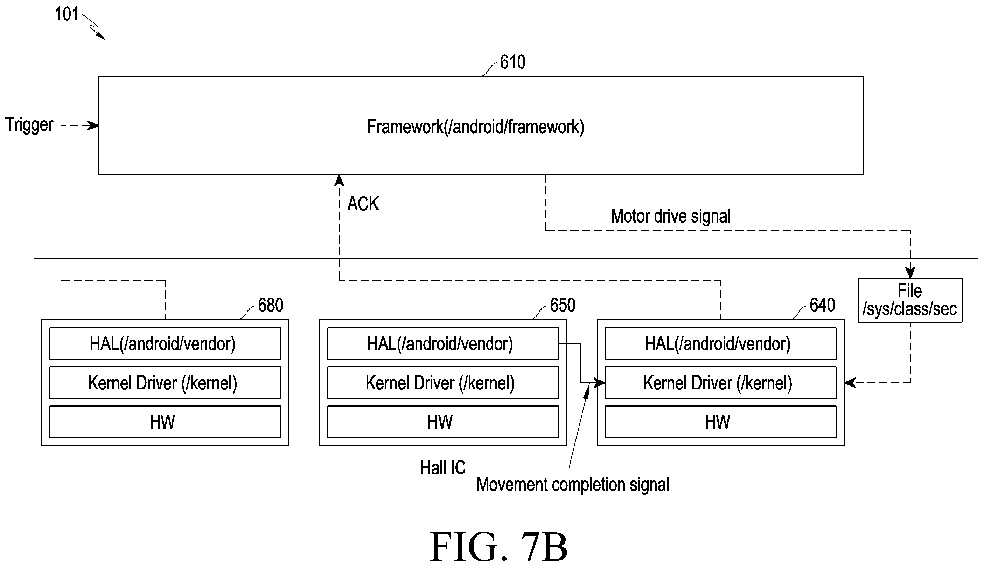

In an embodiment, the trigger signal may occur upon a user input or when a specified condition of the electronic device 101 including the flexible display 620 is satisfied. For example, the trigger signal may include information about a specific direction (e.g., the first direction or the second direction) and/or a specific position to which the flexible display 620 or the second housing 202 is moved. In an embodiment, an input module (e.g., an input module 680 of FIGS. 7A and 7B) described below may output the trigger signal, when the specified condition is satisfied or based on a user input.

In an embodiment, the drive circuit 640 may control the driving of the motor 630 by controlling a current, a voltage, or power applied to the motor 630 based on power stored in the battery 670. In an embodiment, the drive circuit 640 may convert (e.g., step down or step up) power supplied from the battery 670 using the buck/boost 660 and provide the converted power to the motor 630. In an embodiment, the drive circuit 640 may be a component included in the MCU.

In an embodiment, upon receipt of the trigger signal, the electronic device 101 including the flexible display 620 may transmit a drive signal for driving the motor 630 to the drive circuit 640. In an embodiment, the motor drive signal may include a drive direction (e.g., the first direction or the second direction) of the motor 630, a movement distance (or the number of revolutions) of the motor 630, and/or a driving force of the motor 630.

In an embodiment, the drive circuit 640 may monitor an operation state of the motor 630 in real time. In an embodiment, the drive circuit 640 may detect each of an input current applied to the motor 630 and an output current flowing in the motor 630, and determine the operation state of the motor 630 based on the input current and the output current. In an embodiment, the drive circuit 640 may calculate the difference between the input current and the output current, and determine the operation state of the motor 630 based on the calculated difference.

In an embodiment, upon detection of an abnormal operation of the motor 630 based on the determination of the operation state of the motor 630, the drive circuit 640 may transmit a signal related to the abnormal operation to the processor 610.

In an embodiment, the position detection sensor 650 may detect whether the second housing 202 or the flexible display 620 is located at at least one specified position with respect to the first housing 201. In an embodiment, the position detection sensor 650 may detect whether the second housing 202 or the flexible display 620 is located at a target position (e.g., an extended position (an open state) or a retracted position (a closed state)) to which the second housing 202 or the flexible display 620 is to be moved with respect to the first housing 201, based on the trigger signal.

In an embodiment, the second housing 202 may move within a specified range (e.g., 0[mm] to 35[mm]) with respect to the first housing 201, and the position detection sensor 650 may detect the position of the second housing 202 at a specified position (e.g., a 0 [mm] position and a 35[mm] position) in the specified range.

In an embodiment, the position detection sensor 650 may include a Hall sensor circuit (e.g., Hall IC) that detects the position of the flexible display 620 or the second housing 202 by using the Hall effect caused by a magnetic field of a magnet. In an embodiment, the position detection sensor 650 may include a Hall sensor circuit which is fixed to the first housing 201 and detects the strength of a magnetic field of a magnet fixed to the second housing 202 or the flexible display 620. In an embodiment, the magnet may be fixed to the first housing 201, and the Hall sensor circuit may be fixed to the second housing 202 or the flexible display 620. In an embodiment, the position detection sensor 650 may detect whether the second housing 202 or the flexible display 620 is located at a specified position, based on a strength of the magnetic field when the second housing 202 or the flexible display 620 is located at the specified position.

In an embodiment, the position detection sensor 650 may detect the position of the flexible display 620 or the second housing 202, based on a change in capacitance or inductance caused by movement of the second housing 202. In an embodiment, the position detection sensor 650 may detect the position of the flexible display 620 or the second housing using a physical switch. In an embodiment, the position detection sensor 650 may detect the position of the flexible display 620 or the second housing using a roller. In an embodiment, the position detection sensor 650 may detect the position of the flexible display 620 or the second housing 202 using a pressure sensor.

In an embodiment, the processor 610 may cumulatively calculate a movement distance of the second housing 202 or the flexible display 620 with respect to the first housing 201 based on a rotation speed and operation time of the motor 630 based on the motor drive signal. In an embodiment, the processor 610 may control an additional operation of the motor 630 according to the trigger signal, based on the calculated movement distance. In an embodiment, the processor 610 may control a screen displayed on the flexible display 620 based on the calculated movement distance.

FIG. 7A is a detailed block diagram illustrating the electronic device 101 including a flexible display (e.g., the flexible display 620 of FIG. 6) according to a comparative example. FIG. 7B is a detailed block diagram illustrating the electronic device 101 including the flexible display 620 according to an embodiment of the disclosure.

In an embodiment, the input module 680 may output a trigger signal Trigger based on the satisfaction of a specified condition (e.g., execution of a specific application). In an embodiment, the input module 680 may output the trigger signal Trigger based on a user input (e.g., a touch input or a button input). In an embodiment, the trigger signal Trigger may be a signal for moving a second housing (e.g., the second housing 202 of FIG. 2) with respect to a first housing (e.g., the first housing 201 of FIG. 2) in the first direction or the second direction or for extending or retracting the flexible display 620. The trigger signal may include at least one of a movement direction of the second housing 202, a movement distance of the second housing 202, a rotation direction of the motor 630, or a movement distance of the motor 630.

In an embodiment, the processor 610 (e.g., a framework) may transmit a motor drive signal to the drive circuit 640 based on acquisition of the trigger signal. In an embodiment, the motor drive signal may include a rotation direction and rotation angle of the motor 630.

Referring to FIG. 7A, the electronic device 101 including the flexible display 620 may operate the motor 630 based on the motor drive signal generated through the drive circuit 640, based on acquisition of the trigger signal. The processor 610 (e.g., the framework) may receive the position of the second housing 202 or the flexible display 620 (e.g., the display 203 of FIG. 2) with respect to the first housing 201 from a sliding sensor 690 that monitors the position of the second housing 202 or the flexible display 620 in real time.

In an embodiment, the processor 610 may receive a signal ACK related to completion of an operation or a signal ACK related to an abnormal operation from the drive circuit 640, and based on the received signal, receive the position of the second housing 202 or the flexible display 620 with respect to the first housing 201 from the sliding sensor 690.

However, the electronic device 101 including the flexible display 620 in FIG. 7A should read the position of the second housing 202 or the flexible display 620 with respect to the first housing 201 from the sliding sensor 690 operating in real time, and thus performs a complex control step, which may generate a large amount of current consumption.

Referring to FIG. 7B, in the electronic device 101 including the flexible display 620 according to an embodiment of the disclosure, the processor 610 (e.g., the framework) may cumulatively calculate a movement distance of the second housing 202 or the flexible display 620 with respect to the first housing 201, based on a rotation speed and operation time of the motor 630 in an active state of the motor 630 based on the motor drive signal.

In an embodiment, when the operation of the motor 630 based on the motor drive signal is completed, or when an abnormal operation of the motor 630 is detected in the active state of the motor 630, the drive circuit 640 may transmit the signal ACK related to the completion of the operation or a signal ACK related to the abnormal operation to the processor 610. In an embodiment, the processor 610 may receive the signal ACK related to the completion of the operation or the signal ACK related to the abnormal operation from the drive circuit 640, and calculate the movement distance of the second housing 202 or the flexible display 620 with respect to the first housing 201 based on the received signal.

In an embodiment, the position detection sensor 650 (e.g., Hall IC) may detect whether the second housing 202 or the flexible display 620 is located at a specified position with respect to the first housing 201, and transmit a movement completion signal to the drive circuit 640 and/or the processor 610 based on the second housing 202 or the flexible display 620 being located at the specified position. In an embodiment, the drive circuit 640 may complete the operation of the motor 630 based on receiving the movement completion signal. In an embodiment, when the drive circuit 640 completes the operation of the motor 630 corresponding to the motor drive signal, the drive circuit 640 may transmit the signal ACK related to the completion of the operation to the processor 610.

In an embodiment, when the processor 610 receives the movement completion signal from the position detection sensor 650 or receives the operation completion signal ACK from the drive circuit 640, the processor 610 may initialize the cumulatively calculated movement distance.

In an embodiment, the processor 610 may not perform the operation of receiving a signal related to the position of the second housing 202 or the flexible display 620 with respect to the first housing 201 from the sliding sensor 690 of FIG. 7A or requesting a sliding signal from the sliding sensor 690. Accordingly, the consumption current may be reduced by dropping the complex control operation.

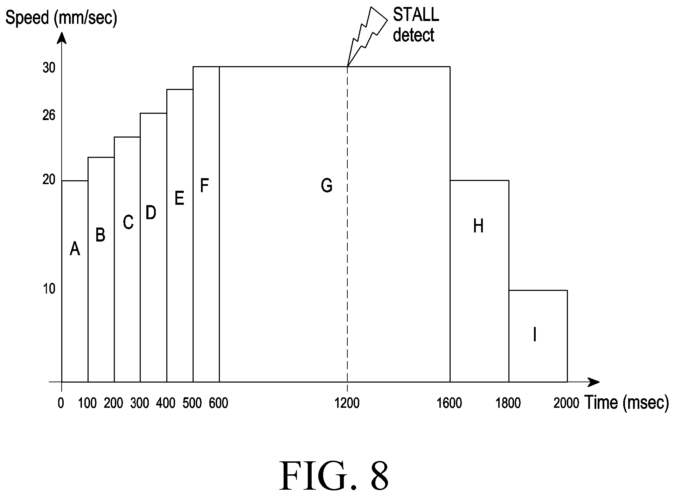

FIG. 8 is a graph illustrating at least one operation period in which a motor (e.g., the motor 630 of FIG. 6) is driven according to an embodiment of the disclosure.

Referring to FIG. 8, the horizontal axis of the graph may represent operation times of the motor 630, and the vertical axis may represent rotation speeds of the motor 630. In an embodiment, each bar (e.g., area) of the graph may be a movement distance of the second housing 202 or the flexible display 620, which is the product of an operation time on the horizontal axis and a rotation speed on the vertical axis. In an embodiment, the electronic device 101 (e.g., the processor 610 of FIG. 6) including the flexible display 620 may cumulatively calculate the movement distance of the second housing 202 or the flexible display 620 based on the rotation speed and operation time of the motor 630 in the active state of the motor 630 based on the motor drive signal.

In an embodiment, the drive circuit 640 may drive the motor 630 in at least one operation period based on the motor drive signal. In an embodiment, the rotation speed of the motor 630 may be set differently for each of the at least one operation period. In an embodiment, based on a condition of a surrounding environment of the electronic device 101 including the flexible display 620 or a user input, at least one operation period A, B, C, D, E, F, G, H, and I may be set to correspond to the trigger signal or motor drive signal related to extension or retraction of the flexible display 620.

In an embodiment, upon receipt of the motor drive signal from the processor 610, the drive circuit 640 may calculate the numbers of acceleration periods and deceleration periods, a rotation speed, and/or an operation time, and set at least one operation period A, B, C, D, E, F, G, H, and I accordingly. For example, as illustrated in FIG. 8, a starting rotation speed, a target rotation speed, and an ending rotation speed may be 20[mm/sec], 30 [mm/sec], and 10[mm/sec], respectively, and their respective operation times may be 600[msec], 1000[msec], and 400[msec] in the at least one operation period A, B, C, D, E, F, G, H, and I by maintaining a constant rotation speed in each operation period, setting five accelerations between operation periods A~B, B~C, C~D, D~E, and E~F, two decelerations between operation periods G~H and H~I.

In an embodiment, the electronic device 101 including the flexible display 620 may cumulatively calculate a movement distance based on a rotation speed and operation time of the motor 630 corresponding to the at least one operation period A, B, C, D, E, F, G, H, and I in which the motor 630 is driven in response to a drive signal.

In an embodiment, the electronic device 101 including the flexible display 620 may measure an operation time of the motor 630 in each of the at least one operation period A, B, C, D, E, F, G, H, and I. In an embodiment, upon completion of an operation of the motor 630 corresponding to each of at least one operation period A, B, C, D, E, and F, the electronic device 101 including the flexible display 620 may calculate a period movement distance corresponding to each of the at least one operation period A, B, C, D, E, and F.

In an embodiment, upon receipt of a signal related to an abnormal operation of the motor 630 in the active state of the motor 630 based on the motor drive signal, the electronic device 101 including the flexible display 620 may transmit a stop signal to the drive circuit 640 to stop the operation of the motor 630. In an embodiment, even if the operation of the motor 630 according to the motor drive signal is not completed, upon receipt of a signal, STALL detect, related to an abnormal operation of the motor 630, the electronic device 101 including the flexible display 620 may transmit the stop signal to the drive circuit 640 to immediately stop the operation of the motor 630.

In an embodiment, when the operation of the motor 630 corresponding to the at least one operation period A, B, C, D, E, F, G, H, and I according to the motor drive signal is stopped, the electronic device 101 including the flexible display 620 may cumulatively calculate a movement distance based on an operation time of the motor 630 until the operation of the motor 630 is stopped, based on the stop signal. For example, when the signal, STALL detect, related to the abnormal operation of the motor 630 is received at a time point of 1200[msec], the movement distance may be cumulatively calculated based on the operation time 600[msec] of the motor until the motor 630 stops operating at the time point of 1200 [msec] in period G. In an embodiment, the electronic device 101 including the flexible display 620 may calculate the movement distance (e.g., 33[mm]) of the second housing 202 or the flexible display 620 by adding the sum (e.g., 15[mm]) of movement distances in period A (movement distance: 2[mm]), period B (movement distance: 2.2[mm]), period C (movement distance: 2.4[mm]), period D (movement distance: 2.6[mm]), period E (movement distance: 2.8[mm]), and period F (movement distance: 3.0[mm]) and a movement distance (e.g., 18[mm]) according to the operation time 600[msec] of the motor 630 until the motor stops operating (at the time point of 1200[msec]) in period G.

In an embodiment, since a delay time for stopping the motor 630 according to the stop signal for the motor 630 by receiving the signal, STALL detect, related to the abnormal operation of the motor 630 is very short, an error in the cumulatively calculated movement distance may be very small, even if the motor 630 is driven at a maximum rotation speed. In addition, the error in the movement distance may be eliminated by initializing the movement distance based on position detection of the position detection sensor 650.

In an embodiment, the electronic device 101 including the flexible display 620 may control a screen displayed on the flexible display 620 based on the cumulatively calculated movement distance. For example, the electronic device 101 including the flexible display 620 may display a screen corresponding to the extended or retracted state (e.g., area) of the flexible display 620 on the flexible display 620 based on the movement distance of the second housing 202 or the flexible display 620.

In an embodiment, the electronic device 101 including the flexible display 620 may transmit an additional drive signal for driving the motor 630 to the drive circuit 640 based on the cumulatively calculated movement distance. In an embodiment, the additional drive signal may correspond to an operation of extending or retracting the flexible display 620. In an embodiment, the electronic device 101 including the flexible display 620 may calculate a distance for which the motor 630 is to be additionally driven in the first direction or a distance for which the motor 630 is to be reversely driven in the second direction, based on the cumulatively calculated movement distance.

In an embodiment, when additionally obtaining a trigger signal related to the extension or retraction of the flexible display 620, the electronic device 101 including the flexible display 620 may transmit the additional drive signal to the drive circuit 640 to drive the motor 630 based on the cumulatively calculated movement distance.

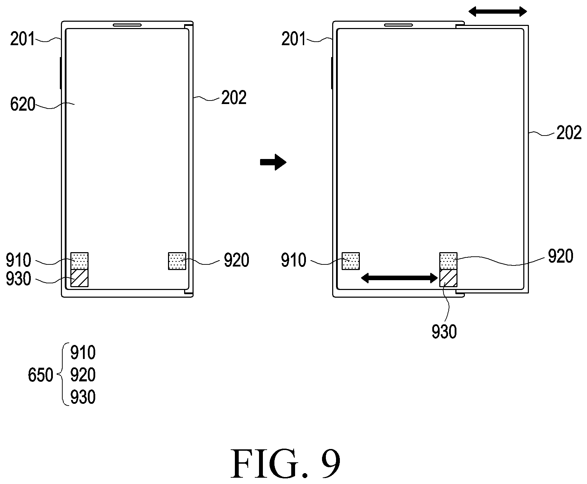

FIG. 9 illustrates the position detection sensor 650 in the retracted and extended states of the flexible display 620 according to an embodiment of the disclosure.

Referring to FIG. 9, the position detection sensor 650 according to an embodiment may include at least one Hall sensor circuit 910 and 920 fixed to the first housing 201 and/or a magnet 930 fixed to the second housing 202 or the flexible display 620.

In an embodiment, the magnet 930 may be fixed to the second housing 202 or the flexible display 620, and may move as the second housing 202 moves with respect to the first housing 201 or as the flexible display 620 is extended or retracted.

In an embodiment, the at least one Hall sensor circuit 910 and 920 may be fixed to the first housing 201 and detect the position of the magnet 930. In an embodiment, each of the at least one Hall sensor circuit 910 and 920 may be disposed at a specified position. The specified position may correspond to the position of the magnet 930 according to the movement of the second housing 202 or the extension or retraction of the flexible display 620 based on the trigger signal.

In an embodiment, the at least one Hall sensor circuit 910 and 920 may detect whether the magnet 930 is located at a specified position. For example, the at least one Hall sensor circuit 910 and 920 may detect whether the second housing 202 or the flexible display 620 is located at a specified position based on the strength of a magnetic field generated when the magnet 930 fixed to the second housing 202 or the flexible display 620 is located at the specified position.

In an embodiment, when obtaining a signal related to the position of the second housing 202 or the flexible display 620 from the position detection sensor 650, the electronic device 101 (e.g., the processor 610 of FIG. 6) including the flexible display 620 may initialize the cumulatively calculated movement distance. In an embodiment, the electronic device 101 including the flexible display 620 may initialize the cumulatively calculated movement distance by obtaining a signal related to whether the second housing 202 or the flexible display 620 is located at the specified position from the position detection sensor 650.

In an embodiment, upon acquisition of the signal related to the position of the second housing 202 or the flexible display 620 from the position detection sensor 650, the electronic device 101 including the flexible display 620 may stop the operation of the motor 630 and initialize the cumulatively calculated movement distance, even if the operation of the motor 630 is not completed.

In an embodiment, when the operation of the motor 630 based on the motor drive signal is completed but the signal related to the position of the second housing 202 or the flexible display 620 is not received from the position detection sensor 650, the electronic device 101 including the flexible display 620 may transmit the additional drive signal to the drive circuit 640 to drive the motor 630 based on the cumulatively calculated movement distance.

In an embodiment, the additional drive signal may be a signal for additionally driving the motor 630 in a driving direction corresponding to a trigger signal related to the extension or retraction of the flexible display 620. In an embodiment, the drive circuit 640 may operate the motor 630 until the signal related to the position of the housing 202 or the flexible display 620 is received from the position detection sensor 650, based on the reception of the additional drive signal.

When the operation of the motor 630 based on the motor driving signal is completed, but the signal related to the position of the second housing 202 or the flexible display 620 is not received from the position detection sensor 650, the electronic device 101 including the flexible display 620 according to an embodiment may perform a calibration operation for the driving of the motor 630. In an embodiment, the electronic device 101 including the flexible display 620 may perform the calibration operation to correct an error due to driving of the motor 630 by driving the motor 630 in the first direction or the second direction until the signal related to the position of the second housing 202 or the flexible display 620 is received from the position detection sensor 650, or by driving the motor 630 until the position of the second housing 202 or the flexible display 620 no longer changes.

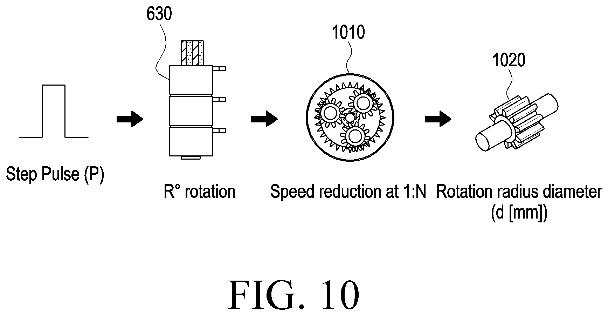

FIG. 10 illustrates a relationship between the rotation of the motor 630 and the movement distance of the second housing 202 or the flexible display 620 according to an embodiment of the disclosure.

Referring to FIG. 10, the motor 630 according to an embodiment may be a device controllable to rotate at a specific angle corresponding to a motor drive signal.

The motor 630 according to an embodiment may be a stepper motor that rotates at a specified angle in response to step pulses. For example, the motor 630 (e.g., rotor) may rotate R [degree] in response to one step pulse.

In an embodiment, the motor 630 may include a reduction gear 1010 that reduces the rotation of a rotor (or an output shaft). In an embodiment, the reduction gear 1010 may be integrated with the motor 630 by being coupled to the rotor inside the motor 630, or may be separately mounted on the output shaft (not shown) coupled to the rotor. In an embodiment, the reduction gear 1010 may reduce the rotation of the rotor at a reduction ratio of 1:N.

In an embodiment, an output gear 1020 (e.g., pinion gear) corresponding to the output shaft (not shown) or the rotor of the motor 630 may be meshed with a rack gear (e.g., the rack 242 of FIG. 4) connected to the first housing 201. In an embodiment, the rack gear 242 may be moved by the rotation of the output gear 1020, and a rotation radius (diameter) of the output gear 1020 may be d[mm].

In an embodiment, the electronic device 101 including the flexible display 620 may calculate a movement distance L of the second housing 202 or the flexible display 620 according to one step pulse P based on a rotation angle R of the motor 630, a reduction ratio N of the reduction gear 1010, and/or a rotation radius d of the output gear 1020 corresponding to the step pulse P by [Equation 1].

$$[\text{Equation 1}]$$

$$L = 1 \times \frac{R}{360} \times \frac{1}{N} \times d\pi$$

In an embodiment, the electronic device 101 including the flexible display 620 may calculate the number of step pulses P corresponding to a motor drive signal, based on the frequency and application time of step pulses P corresponding to the motor drive signal (or at least one operation period), and accordingly calculate the movement distance L of the second housing 202 or the flexible display 620.

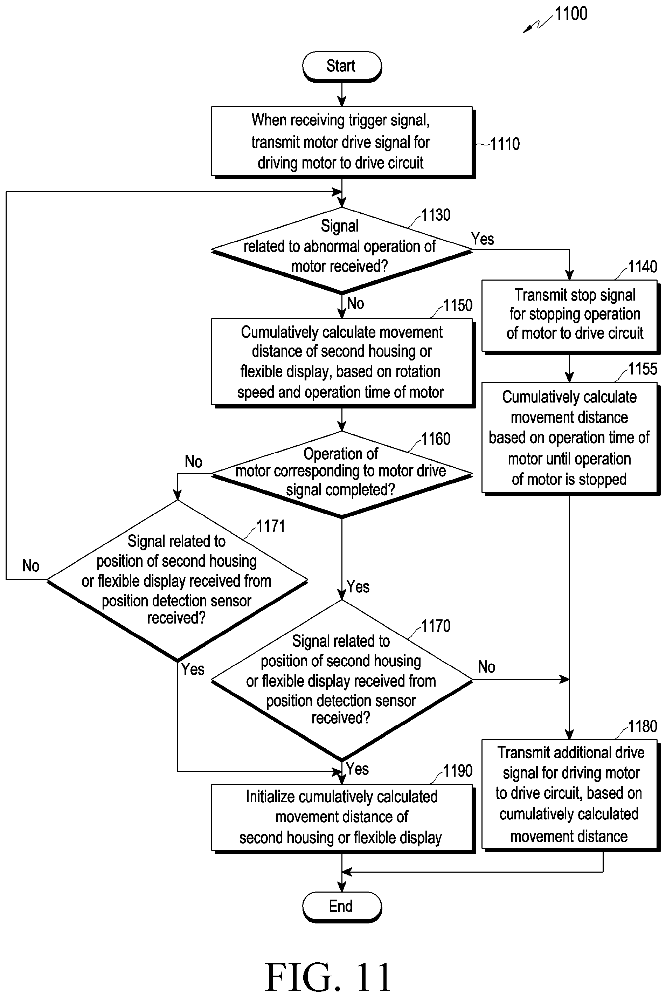

FIG. 11 is a flowchart 1100 illustrating a method of operating the electronic device 101 including the flexible display 620, 160, or 203 according to an embodiment of the disclosure.

Referring to FIG. 11, upon receipt of a trigger signal related to the extension or retraction of the flexible display 620, 160, or 203, the electronic device 101 including the flexible display 620, 160, or 203 according to an embodiment may transmit a motor drive signal for driving the motor 630 or 241 to the drive circuit 640 in operation 1110.

The electronic device 101 including the flexible display 620, 160, or 203 according to an embodiment may determine whether a signal related to an abnormal operation of the motor 630 or 241 has been received in a driving state of the motor 630 or 241 based on the motor drive signal in operation 1130.

When the electronic device 101 including the flexible display 620, 160, or 203 according to an embodiment of the disclosure has not received the signal related to the abnormal operation of the motor 630 or 241 in operation 1130 (operation 1130-No), it may cumulatively calculate a movement distance of the second housing 202 or the flexible display 620, 160, or 203 based on a rotation speed and operation time of the motor 630 or 241 in the active state of the motor 630 or 241 based on the motor drive signal, in operation 1150.

In an embodiment, the electronic device 101 including the flexible display 620, 160, or 203 may cumulatively calculate the movement distance of the second housing 202 or the flexible display 620, 160, or 203 based on a rotation speed and operation time of the motor 630 or 241 corresponding to at least one operation period according to the motor drive signal, in operation 1150.

In an embodiment, the electronic device 101 including the flexible display 620, 160, or 203 may determine whether an operation of the motor 630 or 241 based on the motor drive signal has been completed in operation 1160.

In an embodiment, when the operation of the motor 630 or 241 has not been completed (operation 1160-No), the electronic device 101 including the flexible display 620, 160, or 203 may monitor a signal related to an abnormal operation of the motor 630 or 241 while maintaining the operation of the motor 630 or 241 in operation 1130, and cumulatively calculate the movement distance of the second housing 202 or the flexible display 620, 160, or 203 in operation 1150.

The electronic device 101 including the flexible display 620, 160, or 203 according to an embodiment may skip operation 1160 for determining whether the operation of the motor 630 or 241 based on the motor drive signal has been completed, and may cumulatively calculate the movement distance of the second housing 202 or the flexible display 620, 160, or 203 while maintaining the operation of the motor 630 or 241 based on the motor drive signal, in operation 1150.

Upon receipt of the signal related to the abnormal operation of the motor 630 or 241 in operation 1130 (operation 1130-Yes), the electronic device 101 including the flexible display 620, 160, or 203 according to an embodiment may transmit a stop signal to the drive circuit 640 to stop the operation of the motor 630 or 241 in operation 1140.

Based on the reception of the stop signal, the drive circuit 640 according to an embodiment may urgently stop the operation of the motor 630 or 241 before the operation of the motor 630 or 241 based on the motor drive signal is completed.

The electronic device 101 including the flexible display 620, 160, or 203 according to an embodiment of the disclosure may cumulatively calculate a movement distance based on an operation time of the motor 630 or 241 until the operation of the motor 630 or 241 stops, based on the signal related to the abnormal operation of the motor 630 or 241, in operation 1155.

When determining that the operation of the motor 630 or 241 corresponding to the motor drive signal has been completed in operation 1160 (operation 1160-Yes), the electronic device 101 including the flexible display 620, 160, or 203 according to an embodiment of the disclosure may determine whether a signal related to the position of the second housing 202 or the flexible display 620, 160, or 203 has been received from the position detection sensor 650 in operation 1170.

Upon receipt of the signal related to the position of the second housing 202 or the flexible display 620, 160, or 203 from the position detection sensor 650 in operation 1170 (operation 1170-Yes), the electronic device 101 including the flexible display 620, 160, or 203 according to an embodiment of the disclosure may initialize the cumulatively calculated movement distance of the second housing 202 or the flexible display 620, 160, or 203 in operation 1190.

Even if the electronic device 101 including the flexible display 620, 160, or 203 according to an embodiment of the disclosure determines that the operation of the motor 630 or 241 based on the motor drive signal has not been completed (operation 1160-No), it may determine whether the signal related to the position of the second housing 202 or the flexible display 620, 160, or 203 has been received from the position detection sensor 650 in operation 1171. In an embodiment, upon receipt of the signal related to the position of the second housing 202 or the flexible display 620, 160, or 203 from the position detection sensor 650 (operation 1171-Yes), the electronic device 101 including the flexible display 620, 160, or 203 may initialize the cumulatively calculated movement distance of the second housing 202 or the flexible display 620, 160, or 203 in operation 1190.

In an embodiment, when the operation of the motor 630 or 241 based on the motor drive signal has not been completed (operation 1160-No) and the signal related to the position of the second housing 202 or the flexible display 620, 160, or 203 has not been received from the position detection sensor 650 (operation 1171-No), the electronic device 101 including the flexible display 620, 160, or 203 may repeat operation 1130.

When the operation of the motor 630 or 241 has been completed in operation 1170 but the signal related to the position of the second housing 202 or the flexible display 620, 160, or 203 has not been received from the position detection sensor 650 (operation 1170-No), or when the signal related to the abnormal operation of the motor 630 or 241 has been received in operation 1130 (operation 1130-Yes), the electronic device 101 including the flexible display 620, 160, or 203 according to an embodiment of the disclosure may transmit an additional drive signal to the drive circuit 640 to drive the motor 630 or 241 based on the cumulatively calculated movement distance in operation 1180.

The electronic device 101 including the flexible display 620, 160, or 203 according to an embodiment of the disclosure may transmit the additional drive signal to the drive circuit 640 to drive the motor 630 or 241 in a direction of extending or retracting the flexible display 620, 160, or 203 based on the movement distance of the second housing 202 or the flexible display 620, 160, or 203 cumulatively calculated according to the motor drive signal in operation 1180.

In an embodiment, when additionally obtaining the trigger signal related to the extension or retraction of the flexible display 620, 160, or 203, the electronic device 101 including the flexible display 620, 160, or 203 may transmit the additional drive signal for driving the motor 630 or 241 to the drive circuit 640 in operation 1180.

The electronic device 101 according to an embodiment of the disclosure may include the first housing 201, the second housing 202 disposed to be movable in a first direction or a second direction with respect to the first housing 201 and overlapping at least a portion of the first housing 201, the flexible display 620, 160, or 203 at least partially mounted on a surface of the second housing 202 and having at least a portion of an area exposed to an outside retracted or extended based on movement of the second housing 202, the motor 630 or 241 configured to drive the second housing 202 to move in the first direction or the second direction, the drive circuit 640 configured to control the driving of the motor 630 or 241, and at least one processor. The at least one processor may be configured to, when receiving a trigger signal related to retraction or extension of the flexible display 620, 160, or 203, transmit a motor drive signal for driving the motor 630 or 241 to the drive circuit 640. The at least one processor may be configured to, based on a rotation speed and an operation time of the motor 630 or 241 in an active state of the motor 630 or 241 based on the motor drive signal, calculate a movement distance of the second housing 202 or the flexible display 620, 160, or 203. The at least one processor may be configured to, when obtaining a signal related to a position of the second housing 202 or the flexible display 620, 160, or 203, initialize the calculated movement distance.

In the electronic device 101 according to an embodiment, the motor 630 or 241 may be the stepper motor 630 or 241 configured to rotate at a specified angle in response to step pulses. The motor drive signal may correspond to at least one of the step pulses.

In the electronic device 101 according to an embodiment, the at least one processor may be configured to calculate the movement distance based on at least one of a rotation angle of the motor 630 or 241 corresponding to the step pulses, a reduction ratio of the reduction gear 1010, or a rotation radius of the output gear 1020, as at least part of calculating the movement distance.

In the electronic device 101 according to an embodiment, the at least one processor may be configured to, based on the rotation speed and the rotation time of the motor (630;241) respectively corresponding to at least one operation period driving the motor (630; 241) in response to the driving signal, calculate the movement distance by accumulating a period movement distance respectively corresponding to the at least one operation period.

In the electronic device 101 according to an embodiment, the at least one processor may be configured to measure an operation time of the motor 630 or 241 in each of the at least one operation period, and upon completion of an operation of the motor 630 or 241 corresponding to the at least one operation period, calculate the period movement distance, as at least part of calculating the movement distance.

The electronic device 101 according to an embodiment may further include the position detection sensor 650 configured to detect whether the second housing 202 or the flexible display 620, 160, or 203 is located at at least one specified position. The at least one processor may be configured to receive a signal related to the position of the second housing 202 or the flexible display 620, 160, or 203 from the position detection sensor 650.

In the electronic device 101 according to an embodiment, the position detection sensor 650 may include the Hall sensor circuits 910 and 920 fixed to the first housing 201 and configured to detect a strength of a magnetic field of the magnet 930 fixed to the second housing 202 or the flexible display 620, 160, or 203.

In the electronic device 101 according to an embodiment, the at least one processor may be configured to, based on receiving a signal related to an abnormal operation of the motor 630 or 241 in an active state of the motor 630 or 241 based on the motor drive signal, transmit a stop signal to the drive circuit 640 for stopping the operation of the motor 630 or 241.

In the electronic device 101 according to an embodiment, the at least one processor may be configured to calculate the movement distance based on the operation time of the motor 630 or 241 until the operation of the motor 630 or 241 is stopped, as at least part of calculating the movement distance.

In the electronic device 101 according to an embodiment, the at least one processor may be configured to, based on the calculated movement distance, transmit an additional drive signal for driving the motor 630 or 241 to the drive circuit 640.

In the electronic device 101 according to an embodiment, the at least one processor may be configured to, when the operation of the motor 630 or 241 based on the motor drive signal is completed and the signal related to the position of the second housing 202 or the flexible display 620, 160, or 203 is not obtained, based on the calculated movement distance, transmit the additional drive signal for driving the motor 630 or 241 to the drive circuit 640.

The electronic device 101 according to an embodiment of the disclosure may include the first housing 201, the second housing 202 disposed to be movable in a first direction or a second direction with respect to the first housing 201 and overlapping at least a portion of the first housing 201, the flexible display 620, 160, or 203 at least partially mounted on a surface of the second housing 202 and having at least a portion of an area exposed to an outside retracted or extended based on movement of the second housing 202, the motor 630 or 241 configured to drive the second housing 202 to move in the first direction or the second direction, and the drive circuit 640 configured to control the driving of the motor 630 or 241.

A method of operating the electronic device 101 according to an embodiment of the disclosure may include, when receiving a trigger signal related to retraction or extension of the flexible display 620, 160, or 203, transmitting (1110) a motor drive signal for driving the motor 630 or 241 to the drive circuit 640. The method of operating the electronic device 101 according to an embodiment may include, based on a rotation speed and an operation time of the motor 630 or 241 in an active state of the motor 630 or 241 based on the motor drive signal, calculating (1150 or 1155) a movement distance of the second housing 202 or the flexible display 620, 160, or 203. The method of operating the electronic device 101 according to an embodiment may include, when obtaining a signal related to a position of the second housing 202 or the flexible display 620, 160, or 203, initializing (1190) the calculated movement distance.

In the method of operating the electronic device 101 according to an embodiment, the motor 630 or 241 may be the stepper motor 630 or 241 rotating at a specified angle in response to step pulses. The motor drive signal may correspond to at least one of the step pulses. Calculating (1150 or 1155) the movement distance may include calculating the movement distance based on at least one of a rotation angle of the motor 630 or 241 corresponding to the step pulses, a reduction ratio of the reduction gear 1010, or a rotation radius of the output gear 1020.

In the method of operating the electronic device 101 according to an embodiment, based on the rotation speed and the rotation time of the motor (630;241) respectively corresponding to at least one operation period driving the motor (630; 241) in response to the driving signal, calculating the movement distance by accumulating a period movement distance respectively corresponding to the at least one operation period.

In the method of operating the electronic device 101 according to an embodiment, calculating (1150 or 1155) the movement distance may include measuring an operation time of the motor 630 or 241 in each of the at least one operation period, and upon completion of an operation of the motor 630 or 241 corresponding to the at least one operation period, calculating the period movement distance, as at least part of calculating the movement distance.

The method of operating the electronic device 101 according to an embodiment may further include receiving a signal related to the position of the second housing 202 or the flexible display 620, 160, or 203 from the position detection sensor 650 detecting whether the second housing 202 or the flexible display 620, 160, or 203 is located at at least one specified position.

The method of operating the electronic device 101 according to an embodiment may further include, based on receiving a signal related to an abnormal operation of the motor 630 or 241 in an active state of the motor 630 or 241 based on the motor drive signal, transmitting a stop signal to the drive circuit 640 for stopping the operation of the motor 630 or 241.

In the method of operating the electronic device 101 according to an embodiment, calculating (1155) the movement distance may include calculating the movement distance based on the operation time of the motor 630 or 241 until the operation of the motor 630 or 241 is stopped.

The method of operating the electronic device 101 according to an embodiment may further include transmitting (1180), based on the calculated movement distance, an additional drive signal for driving the motor 630 or 241 to the drive circuit 640.

The method of operating the electronic device 101 according to an embodiment may further include, when the operation of the motor 630 or 241 based on the motor drive signal is completed and the signal related to the position of the second housing 202 or the flexible display 620, 160, or 203 is not obtained, transmitting (1180), based on the calculated movement distance, the additional drive signal for driving the motor 630 or 241 to the drive circuit 640.

A non-transitory computer-readable storage medium storing at least one program according to an embodiment of the disclosure may include, based on execution of an application, when receiving a trigger signal related to retraction or extension of the flexible display 620, 160, or 203, transmitting (1110) a motor drive signal for driving the motor 630 or 241 to the drive circuit 640. The storage medium according to an embodiment may include, based on a rotation speed and an operation time of the motor 630 or 241 in an active state of the motor 630 or 241 based on the motor drive signal, calculating (1150 or 1155) a movement distance of the second housing 202 or the flexible display 620, 160, or 203. The storage medium according to an embodiment may include, when obtaining a signal related to a position of the second housing 202 or the flexible display 620, 160, or 203, initializing (1190) the calculated movement distance.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to an embodiment, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:

   memory (130) storing instructions;
   a first housing (201);
   a second housing (202) disposed to be movable in a first direction or a second direction with respect to the first housing (201) and overlapping at least a portion of the first housing (201);
   a flexible display (620; 160; 203) at least partially mounted on a surface of the second housing (202) and having at least a portion of an area exposed to an outside retracted or extended based on movement of the second housing (202);
   a motor (630; 241) configured to drive the second housing (202) to move in the first direction or the second direction;
   a drive circuit (640) configured to control the driving of the motor (630; 241); and
   a processor (120; 610),
   wherein the instructions, when executed by the processor (120; 610), cause the electronic device (101) to:

   when receiving a trigger signal related to retraction or extension of the flexible display (620; 160; 203), transmit a motor drive signal for driving the motor (630; 241) to the drive circuit (640),
   based on a rotation speed and an operation time of the motor (630; 241) in an active state of the motor (630; 241) based on the motor drive signal, calculate a movement distance of the second housing (202) or the flexible display (620; 160; 203), and
   when obtaining a signal related to a position of the second housing (202) or the flexible display (620; 160; 203), initialize the calculated movement distance.

2. The electronic device (101) of claim 1, wherein the motor (630; 241) is a stepper motor (630; 241) configured to rotate at a specified angle in response to step pulses, and
   wherein the motor drive signal corresponds to at least one of the step pulses.

3. The electronic device (101) of claim 2, wherein the instructions, when executed by the processor (120; 610), cause the electronic device (101) to calculate the movement distance based on at least one of a rotation angle of the motor (630; 241) corresponding to the step pulses, a reduction ratio of a reduction gear (1010), or a rotation radius of an output gear (1020), as at least part of the calculating of the movement distance.

4. The electronic device (101) of any one of claims 1 to 3, wherein the instructions, when executed by the processor (120; 610), cause the electronic device (101) to, based on the rotation speed and the rotation time of the motor (630; 241) respectively corresponding to at least one operation period driving the motor (630; 241) in response to the driving signal, calculate the movement distance by accumulating a period movement distance respectively corresponding to the at least one operation period.

5. The electronic device (101) of claim 4, wherein the instructions, when executed by the processor (120; 610), cause the electronic device (101) to measure the operation time of the motor (630; 241) in each of the at least one operation period, and upon completion of an operation of the motor (630; 241) corresponding to the at least one operation period, calculate the period movement distance, as at least part of calculating the movement distance.

6. The electronic device (101) of any one of claims 1 to 5, further comprising a position detection sensor (650) configured to detect whether the second housing (202) or the flexible display (620; 160; 203) is located at at least one specified position,
   wherein the instructions, when executed by the processor (120; 610), cause the electronic device (101) to receive a signal related to the position of the second housing (202) or the flexible display (620; 160; 203) from the position detection sensor (650).

7. The electronic device (101) of claim 6, wherein the position detection sensor (650) includes a Hall sensor circuit (910, 920) fixed to the first housing (201) and configured to detect a strength of a magnetic field of a magnet (930) fixed to the second housing (202) or the flexible display (620; 160; 203).

8. The electronic device (101) of any one of claims 1 to 7, wherein the instructions, when executed by the processor (120; 610), cause the electronic device (101) to, based on receiving a signal related to an abnormal operation of the motor (630; 241) in the active state of the motor (630; 241) based on the motor drive signal, transmit a stop signal to the drive circuit (640) configured to stop the operation of the motor (630; 241).

9. The electronic device (101) of claim 8, wherein the instructions, when executed by the processor (120; 610), cause the electronic device (101) to calculate the movement distance based on the operation time of the motor (630; 241) until the operation of the motor (630; 241) is stopped, as at least part of calculating the movement distance.

10. The electronic device (101) of claim 8 or 9, wherein the instructions, when executed by the processor (120; 610), cause the electronic device (101) to, based on the calculated movement distance, transmit an additional drive signal for driving the motor (630; 241) to the drive circuit (640).

11. The electronic device (101) of any one of claims 1 to 10, wherein the instructions, when executed by the processor (120; 610), cause the electronic device (101) to, when the operation of the motor (630; 241) based on the motor drive signal is completed and the signal related to the position of the second housing (202) or the flexible display (620; 160; 203) is not obtained, based on the calculated movement distance, transmit the additional drive signal for driving the motor (630; 241) to the drive circuit (640).

12. A method of operating an electronic device (101) including a first housing (201), a second housing (202) disposed to be movable in a first direction or a second direction with respect to the first housing (201) and overlapping at least a portion of the first housing (201), a flexible display (620; 160; 203) at least partially mounted on a surface of the second housing (202) and having at least a portion of an area exposed to an outside retracted or extended based on movement of the second housing (202), a motor (630; 241) configured to drive the second housing (202) to move in the first direction or the second direction, and a drive circuit (640) configured to control the driving of the motor (630; 241), the method comprising:

when receiving a trigger signal related to retraction or extension of the flexible display (620; 160; 203), transmitting (1110) a motor drive signal for driving the motor (630; 241) to the drive circuit (640);
based on a rotation speed and an operation time of the motor (630; 241) in an active state of the motor (630; 241) based on the motor drive signal, calculating (1150; 1155) a movement distance of the second housing (202) or the flexible display (620; 160; 203); and
when obtaining a signal related to a position of the second housing (202) or the flexible display (620; 160; 203), initializing (1190) the calculated movement distance.

13. The method of claim 12, wherein the motor (630; 241) is a stepper motor (630; 241) rotating at a specified angle in response to step pulses,

wherein the motor drive signal corresponds to at least one of the step pulses, and
wherein calculating (1150; 1155) the movement distance includes calculating the movement distance based on at least one of a rotation angle of the motor (630; 241) corresponding to the step pulses, a reduction ratio of a reduction gear (1010), or a rotation radius of an output gear (1020), corresponding to the step pulses.

14. The method of claim 12 or 13, wherein calculating (1150; 1155) the movement distance includes based on the rotation speed and the rotation time of the motor (630;241) respectively corresponding to at least one operation period driving the motor (630; 241) in response to the driving signal, calculating the movement distance by accumulating a period movement distance respectively corresponding to the at least one operation period.

15. A computer-readable storage medium (130) storing instructions which when executed by a processor of an electronic device (101) including a first housing (201), a second housing (202) disposed to be movable in a first direction or a second direction with respect to the first housing (201) and overlapping at least a portion of the first housing (201), a flexible display (620; 160; 203) at least partially mounted on a surface of the second housing (202) and having at least a portion of an area exposed to an outside retracted or extended based on movement of the second housing (202), a motor (630; 241) configured to drive the second housing (202) to move in the first direction or the second direction, and a drive circuit (640) configured to control the driving of the motor (630; 241), enable the electronic device (101) to perform operations,
wherein the operations include:

> when receiving a trigger signal related to retraction or extension of the flexible display (620; 160; 203), transmitting (1110) a motor drive signal for driving the motor (630; 241) to the drive circuit (640);
> based on a rotation speed and an operation time of the motor (630; 241) in an active state of the motor (630; 241) based on the motor drive signal, calculating (1150; 1155) a movement distance of the second housing (202) or the flexible display (620; 160; 203); and
> when obtaining a signal related to a position of the second housing (202) or the flexible display (620; 160; 203), initializing (1190) the calculated movement distance.

FIG. 1

EP 4 625 097 A1

FIG. 2

FIG. 3

FIG. 4

FIG. 5A

EP 4 625 097 A1

FIG. 5B

FIG. 6

101

610

Trigger

Framework(/android/framework)

Sliding position | ACK

Motor drive signal

680

690

640

File /sys/class/sec

| HAL(/android/vendor) | HAL(/android/vendor) | HAL(/android/vendor) |
| Kernel Driver (/kernel) | Kernel Driver (/kernel) | Kernel Driver (/kernel) |
| HW | HW | HW |

Sliding sensor

FIG. 7A

FIG. 7B

EP 4 625 097 A1

FIG. 8

# FIG. 9

630

1010

1020

Step Pulse (P)

R° rotation      Speed reduction at 1:N   Rotation radius diameter
(d [mm])

# FIG. 10

~1100

```
                        ┌─────────┐
                        │  Start  │
                        └─────────┘
                             │
                             ▼
              ┌───────────────────────────────┐
              │ When receiving trigger signal,│
              │ transmit motor drive signal for│──1110
              │ driving motor to drive circuit │
              └───────────────────────────────┘
                             │
                             ▼
                         ╱1130╲
                      Signal
          ╱ related to abnormal operation of ╲  Yes
          ╲        motor received?          ╱──────────┐
                         ╲   ╱                          ▼
                          │ No                ┌──────────────────┐
                          ▼                   │ Transmit stop signal │──1140
```

When receiving trigger signal, transmit motor drive signal for driving motor to drive circuit — 1110

Signal related to abnormal operation of motor received? — 1130

Transmit stop signal for stopping operation of motor to drive circuit — 1140

Cumulatively calculate movement distance of second housing or flexible display, based on rotation speed and operation time of motor — 1150

Cumulatively calculate movement distance based on operation time of motor until operation of motor is stopped — 1155

Operation of motor corresponding to motor drive signal completed? — 1160

Signal related to position of second housing or flexible display received from position detection sensor received? — 1171

Signal related to position of second housing or flexible display received from position detection sensor received? — 1170

Initialize cumulatively calculated movement distance of second housing or flexible display — 1190

Transmit additional drive signal for driving motor to drive circuit, based on cumulatively calculated movement distance — 1180

End

# FIG. 11

## INTERNATIONAL SEARCH REPORT

| International application No. |
|---|
| **PCT/KR2023/021331** |

### A. CLASSIFICATION OF SUBJECT MATTER

**G06F 1/16**(2006.01)i; **H02P 1/22**(2006.01)i; **H02P 6/06**(2006.01)i; **H02P 6/30**(2016.01)i; **H04M 1/02**(2006.01)i

According to International Patent Classification (IPC) or to both national classification and IPC

### B. FIELDS SEARCHED

Minimum documentation searched (classification system followed by classification symbols)

G06F 1/16(2006.01); F16M 11/04(2006.01); G01B 11/04(2006.01); G09F 9/30(2006.01); H02K 11/215(2016.01); H02K 11/33(2016.01); H04M 1/02(2006.01); H04M 1/725(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 플렉서블 디스플레이(flexible display), 스텝 모터(stepper motor), 회전 속도 (rotation speed), 동작 시간(operating time), 이동 거리(moving distance), 초기화(initiation), 센서(sensor)

### C. DOCUMENTS CONSIDERED TO BE RELEVANT

| Category* | Citation of document, with indication, where appropriate, of the relevant passages | Relevant to claim No. |
|---|---|---|
| Y | KR 10-2022-0019499 A (SAMSUNG ELECTRONICS CO., LTD.) 17 February 2022 (2022-02-17)<br>See paragraphs [0026], [0030], [0042], [0045], [0059], [0066] and [0098]; claim 1; and figures 2 and 5-6. | 1-15 |
| Y | KR 10-2022-0084012 A (LG ELECTRONICS INC.) 21 June 2022 (2022-06-21)<br>See claims 2 and 5. | 1-15 |
| Y | KR 10-2022-0040372 A (SAMSUNG ELECTRONICS CO., LTD.) 30 March 2022 (2022-03-30)<br>See paragraphs [0158] and [0163]; and claim 15. | 8-11 |
| A | KR 10-2021-0087765 A (SAMSUNG ELECTRONICS CO., LTD.) 13 July 2021 (2021-07-13)<br>See claims 1-16. | 1-15 |
| A | KR 10-2021-0118850 A (LG ELECTRONICS INC.) 01 October 2021 (2021-10-01)<br>See paragraph [0074]; and figure 1. | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 April 2024** | **17 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2023/021331** |

| Patent document cited in search report | | | Publication date (day/month/year) | Patent family member(s) | | | Publication date (day/month/year) |
| --- | --- | --- | --- | --- | --- | --- | --- |
| KR | 10-2022-0019499 | A | 17 February 2022 | WO | 2022-035062 | A1 | 17 February 2022 |
| KR | 10-2022-0084012 | A | 21 June 2022 | EP | 4047913 | A1 | 24 August 2022 |
| | | | | US | 2023-0336646 | A1 | 19 October 2023 |
| | | | | WO | 2021-075610 | A1 | 22 April 2021 |
| KR | 10-2022-0040372 | A | 30 March 2022 | EP | 4184764 | A1 | 24 May 2023 |
| | | | | US | 2022-0091636 | A1 | 24 March 2022 |
| | | | | WO | 2022-065884 | A1 | 31 March 2022 |
| KR | 10-2021-0087765 | A | 13 July 2021 | US | 2021-0208552 | A1 | 08 July 2021 |
| | | | | WO | 2021-137505 | A1 | 08 July 2021 |
| KR | 10-2021-0118850 | A | 01 October 2021 | CN | 111565239 | A | 21 August 2020 |
| | | | | EP | 3926933 | A1 | 22 December 2021 |
| | | | | KR | 10-2021-0116542 | A | 27 September 2021 |
| | | | | US | 2020-0264660 | A1 | 20 August 2020 |
| | | | | WO | 2020-166761 | A1 | 20 August 2020 |

Form PCT/ISA/210 (patent family annex) (July 2022)